Europäisches Patentamt

European Patent Office

Office européen des brevets

(11) Publication number: **0 348 363**
**A2**

## EUROPEAN PATENT APPLICATION

(21) Application number: **89830279.9**

(22) Date of filing: **20.06.89**

(51) Int. Cl.⁴: **G 01 S 3/80**

(30) Priority: **21.06.88 IT 943188**

(43) Date of publication of application:
**27.12.89 Bulletin 89/52**

(84) Designated Contracting States:
**AT BE CH DE ES FR GB GR LI NL SE**

(71) Applicant: **OFFICINE PANERAI S.P.A.**
**Piazza G. Ferraris, 2**
**I-50131 Firenze (IT)**

(72) Inventor: **Biffi Gentili, Guido**
**Via dei Cappuccini No. 15**
**I-50134 Firenze (IT)**

(74) Representative: **Mannucci, Gianfranco, Dott.-Ing.**
**Ufficio Tecnico Ing. A. Mannucci Via della Scala 4**
**I-50123 Firenze (IT)**

(54) Amplitude comparison ultrasound receiver for localizing submarine sound sources.

(57) The receiver comprises: at least a pair of receiving transducers (TS, TD) with squint axes, i.e. axes inclined to each other; an electronic circuit (15, 16) combined to said pair of transducers for amplifying and processing of signals detected by the amplitude comparison transducers; and a system for displaying the processed signals.

FIG. 2

**Description**

## AMPLUTIDE COMPARISON ULTRASOUND RECEIVER FOR LOCALIZING SUBMARINE SOUND SOURCES

The invention relates to a ultrasound receiver for detecting submarine or similar sound sources.

In the submarine environment operators or diving means are frequently required to localize an object or a given site under the sea surface and then to approach it. This is made possible by the use of a system consisting of a suitable ultrasound emitter ("pinger") which marks the object or the site to be tracked down and of a ultrasound receiver, with suitable directivity and sensitivity characteristics, which allows the source direction of the acoustic signal from the emitter to be identified. The applications of such a system are numerous and concern several sectors of the submarine activities among which:

- Systematic search operations carried out on the sea bottom for archeological, military and professional purposes;
- localization of sunk objects for the recovery thereof (for example, black boxes of aeroplanes sunk following an accident);
- tracking of remote-controlled submarine objects;
- localization of submarine pipe lines for purposes of periodical service or repair operations;
- localization of specific components (for example valves) within the bearing structures of offshore drilling platforms, for the same purposes as above.

Sometimes, the search operations may be carried out also on surface, provided the ultrasound receiver is kept immersed by a suitable mechanical support.

Several types of ultrasound emitters (pingers) are commercially available, which operate at various frequencies either continuosly or in pulsing fashion, meeting the many requirements of range and autonomy that may arise from specific applications. Receivers are also available, even of portable type, which make use either of: a) a single directional transducer; or b) a pair of transducers operating on the phase comparison principle. Of the two abovementioned types of transducers solution (a) has the principal drawback that it does not provide for a direction (right-left) indication, but gives only a signal which has a maximum value in correspondence of the correct sighting, while solution (b) is generally characterized by a poor sensitivity, which greatly reduces its range, and by significant angular errors caused by the multipath effect, i.e. the phenomenon of propagation of the signal over multiple paths. In the latter solution, both the cited drawbacks are to be mainly ascribed to the directivity characteristics of the receiving transducers (essentially omnidirectional), which do not allow high gains and sufficient spatial selectivity to be obtained.

The object of the present invention is to provide a directional ultrasound receiver having characteristics suitable for the above defined purposes, which is able to meet, as far as possible, the following requirements:
- high compactness;
- high angular discrimination;

- high sensitivity and, accordingly, extended range;
- maximum insensitiveness to multipath effects;
- high dynamic and, accordingly, no adjustments during use;
- easily interpretable and not ambiguous direction indication.

These objects are achieved, according to the invention, by an ultrasound receiver characterized by:
at least a pair of receiving transducers with squint axes, i.e. axes inclined to each other; an electronic circuit combined with to said pair of transducers, for amplifying and processing by amplitude comparison the signals detected by the transducers; and a system for displaying the processed signals.

By exploiting the amplitude comparison principle, the receiver according to the invention relies essentially on the use of two directional transducers with axes forming a so-called "squint" angle to each other, characterized by partially superimposed directivity diagrams. The intersection of the two diagrams defines the equisignal axis, that is, the direction in correspondence of which the signals received by the two transducers are equal. If the direction from the incident ultrasound front coincides with the equisignal axis, the amplitude difference of the signals picked up by the two transducers is equal zero; otherwise, it results other than zero and of opposite sign for directions originating from opposite sides of the equisignal axis. By exploiting this principle, the following major advantages can be obtained:
- reduction of the effects caused by environmental noise which tend to blank out in the difference signal, thereby giving high, inherent sensitivity;
- high inherent dynamics owing to the fact that the signal is equal zero under sighting condition;
- absence of ambiguity and multipath effect reduction, because of the directivity characteristics of the transducers

In practice, the squint angle, that is, the angle formed by the transducers axes, may be adjusted, e.g. mechanically.

In a practical embodiment of the invention, the amplification and processing electronic circuit comprises in combination, for each pair of transducers: for each transducer, a signal pre-amplification and equalization block; a switch which alternatively picks up the amplified signals of the two transducers, said switch operating at a sampling frequency supplied by a scaler driven by an oscillator; a block for selecting, amplifying and filtering the output signal from said switch; a block for demodulating the output signal from said selecting, amplifying and filtering block; the signal coming out from said demodulating block being fed to the displaying system.

The selecting, amplifying and filtering block may comprise: a selective amplifier centered on the sampling frequency of said switch, a filter, and an amplifier. Between the selective amplifier and the filter, a balanced mixer may be interposed, able to convert the frequency of the signal on output from said selective amplifier, said mixer being driven by said oscillator.

In a feasible embodiment, the demodulating block comprises an amplitude detector, a band-pass filter and a phase detector.

Advantageously, the output signal from said amplitude detector is fed to a feedback loop for the automatic control of the gain of said selecting, amplifying and filtering block; a signal of the presence of the carrier being drawn from said feedback loop and delivered to the display system.

The output signal from the demodulating block may be fed, not only to the display system, but also to a block for eliminating the noise component from the useful signal.

The display system may comprise, in practice, a mobile-coil device controlled by the signal on output from said demodulating block, or a window generator to which the output signal from said demodulating block is fed, said window generator driving a plurality of light emitting diodes according to the intensity and sign of the output signal from said demodulating block

The receiver may further comprise a comparator which compares the intensity of the continuous component of the signal detected with a threshold value, said comparator driving another light emitting diode which may be further controlled by a comparator able to inhibit the switching on thereof in case the noise component in the detected signal reaches too high values.

Advantageously, said light emitting diodes may be switches on intermittently.

In a modified embodiment, the receiver may comprise two pairs of receiving transducers with inclined, i.e. squint axes, lying on two planes orthogonal one to the other; to each pair of receiving transducers an electronic circuit being combined for the amplifying and processing the received signal. In this case, the display system may comprise five light emitting diodes for the displaying of the direction of the received signal and a light emitting diode for detecting the presence of the carrier.

The electronic circuit for the amplification and processing of the signals detected by the transducers may be modified to allow the demodulation of analog and/or digital signals superimposed to the signal detected for the localization.

The invention will be better understood by reading the following description, reference being made to the attached drawing, which shows a practical, non limiting example of said invention. In the drawing:

Fig.1 schematically shows the directivity diagrams of the pairs of transducers;

Fig.2 shows a block diagram of the electronic circuit for the amplification and processing of the signal detected by the transducers;

Figs.3 to 5 show, by way of example only, the signal waveform at three points of the amplifying and processing circuity; and

Fig.6 shows a block diagram of the display system.

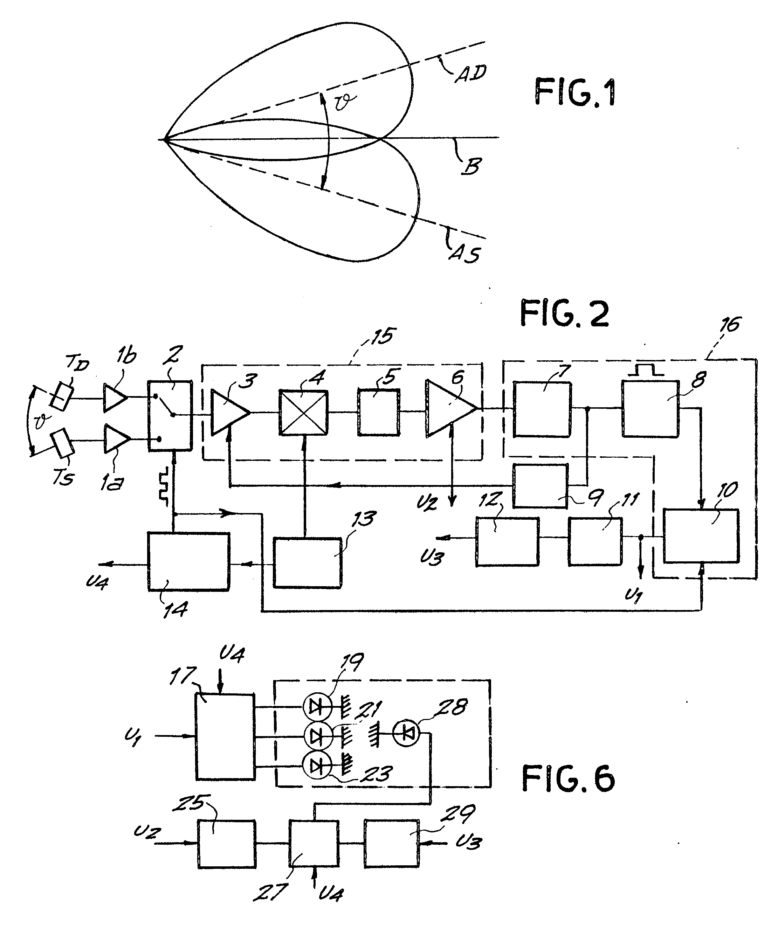

Fig.1 shows schematically the partially overlapping directivity diagrams of two transducers TS and TD used in an ultrasound receiver according to the invention. Each diagram has an axis AS and AD, respectively, the two axes are inclined to each other to form a so-called squint angle $\theta$ whose bisectrix B corresponds to the equisignal axis (defined by the intersection of the directivity diagrams). By suitably processing the signals detected by the two transducers TS and TD, as will be described in more detail later, the origin direction of the wave front relative to said equisignal axis B can be determined.

The signal detected by the two transducers TS and TD are processed by an electronic circuit to be described with reference to the operational block diagrams of Fig.2, as far as the signal amplification and processing are concerned, and of Fig.6, as far as the displaying is concerned.

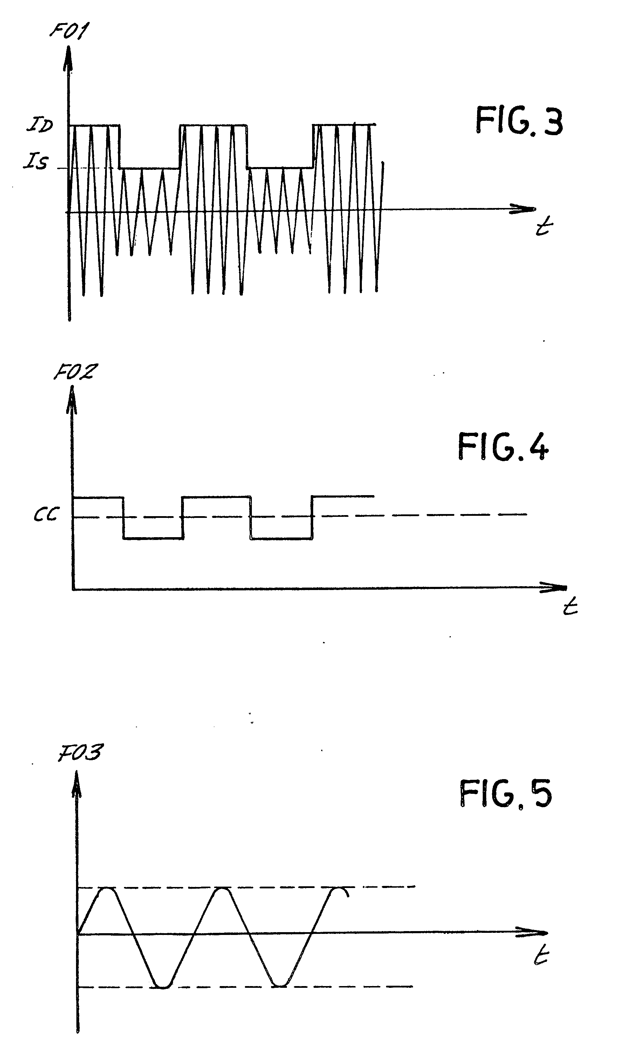

In Fig 2, TS and TD represent the receiving transducers with inclined axes which form a squint angle $\theta$ (typically 25-40°) operating at the pinger frequency, i.e. at the emitter frequency fo (typically 40-100 kHz). The low-level signals picked up by the transducers are pre-amplified by the two blocks 1a and 1b, which also act as gain equalizers. The output signals from blocks 1a and 1b are delivered to an electronic switch 2 which draw alternatively the amplified signals of the two transducers at the sampling frequency fc (typically 100-300 Hz). As a result, at the output of switch 2 a waveform F01 is present, as shown in Fig.3, where ID and IS represent respectively the amplitudes of the signals relevant to the right channel and to the left channel, i.e. the amplitudes of the pre-amplified signals from transducers TD and TS, respectively. In case the direction of the incident wave front coincides with the equisignal axis B, the two amplitudes ID and IS will be equal. When, on the contrary, the direction of the wave front is between axes AD and B, the value ID will be greater than IS, as shown in Fig.3, and vice versa.

The signal sampled in this way is fed to a block 15 including a selective amplifier 3 centered on frequency fo, which acts as a preselector, and a balanced mixer 4, where the signal undergoes a sloping beat frequency conversion with the signal generated by a quarz oscillator 13. In the conversion process, the signal is transferred from the fo frequency to a fixed frequency, for example of 455 kHz, so that commercial ceramic filters may be used for filtering at an intermediate frequency, which is carried out by the block 5. The block 15 includes also an amplifier 6, in which the signal converted at the frequancy fo is subsequently processed.

The output signal from block 15 is further processed in a demodulation block generally indicated by 16. Said block 16 includes an amplitude detector 7. The output signal from block 7, characterized by a waveform FOZ shown in Fig.4, is used for the automatic control of the gain through a low-pass filter 9 which draws out the continuous component CC therefrom. Such component, through the feedback loop, controls the amplifiers 3 and 6 and is made available at an output U2. The output of block 7 is also sent to a band-pass filter 8, centered on the sampling frequency fc, which has the function of further reducing the noise and eliminating the continuous component CC. At the output of filter 8, therefore, the signal takes up the trend indicated by the waveform F03 shows in Fig.5. The signal processed in this way is then fed to a synchronous phase detector 10, which detects the amplitude and sign of the difference signal through a synchronous demodulation process. The output of the phase detector, made available on U1, is also sent to a noise filter 11, which draws out any noise components from the useful signal and sends them to an amplitude detector 12 with output on U3 for the purposes to be specified later.

The sampling signal at the frequency fc, which drives blocks 2 and 10, is obtained by a suitable scaler 14 driven by the quarz oscillator 13. By a further division, a very low frequency signal (about 1 Hz) of rectangular shape is made available on the output U4.

The electronic circuit for the processing of the signal, as described with reference to Fig.2, is thereby made up of: an output U1 with an analog signal proportional to the difference of amplitudes ID and IS of the signals detected by the two transducers TD and TS, which is equal zero when the wavefront of the signal emitted by the emitter has a direction coincident with that of the equisignal axis B (Fig.1); an output U2 on which a signal is available which is proportional to the continuous component CC of the signal demodulated by the amplitude detector 7 and which is thereby capable of detecting whether the carrier of the signal emitted by the emitter or pinger is present or not; an output U3, on which a signal is available, which is proportional to the noise component of the signal available on U1; and an output U4 on which a square-wave, low-frequency signal is available.

The signal available on outputs U1, U2, U3, U4 are sent to the display system. In the example illustrated in Fig.6, the display system comprises a block 17 which represents a window generator which, by using a pair of amplitude comparators, processes the analog bipolar signal from output U1 in order to drive the light emitting diodes (LEDs) 19, 21, 23. The driving logic is as follows:
- if the signal of U1 is small in module (a condition corresponding to ID ≈ IS) the LED 21 (center) is caused to light up;
- if the signal of U1 exceeds a predetermined threshold AV and is of positive sign (a condition corresponding to ID > IS), the LED 19 (right) is caused to light up;
- if the signal of U1 exceeds the predetermined threshold AV and is of negative sign (a condition corresponding to IS > ID), the LED 23 (left) lights up.

Thus, the switching on of one of the diodes 19, 21, 23 allows to detect the origin direction of the signal emitted by the emitter, with respect to the equisignal axis B of the pair of transducers.

The block 25 represents a comparator in which the signal U2 from the feedback loop of the receiver is compared with a threshold. If the signal available on U2 exceeds the threshold, a light emitting diode (LED) 28 is lit up via a gate 27 to signal the presence of the carrier. The switching on of the above LED is inhibited, however, if the signal U3, whose amplitude depends on the environmental and interior noise, exceeds a given threshold. This function is carried out by a threshold comparator 29 via the gate 27.

The approximately 1 Hz-frequency signal U4, is sent to the window generator 17 and to the gate 27, so as to render the switching on of the LEDs discontinous in order to limit its energy consumption.

The colours and positions of the four LEDs of the display may be chosen so as to ease the reading thereof.

It thus results from the above that it is possible, from the reading of the four luminous diodes 19, 21, 23, 28, to detect the presence and intensity of the signal delivered by the emitter, as well as the propagation direction thereof with respect to the equisignal axis B.

The circuitry details of each block of Figs.2 to 6 will not be further described as the functions performed by such blocks may be obtained by different circuit solutions; moreover, more functions may be integrated in a single, commercially available circuit.

Moreover, the above described display system may be replaced by a mobile coil instrument, e.g. a mid-zero milliammeter, to be connected to the output U1 of the bipolar signal.

It is also possible to adopt two pairs of receiving transducers with squint axes lying on two planes orthogonal to each other. In this case, two independent receiving chains will be provided equal one to the other, one for each pair of transducers, and similar to the chain shown in Fig.2. It is thus possible to obtain indications on the direction of the signal propagation over two planes, that is, over two angular dimensions. In this case, it is possible to adopt a display system similar to that shown in Fig.6 but with a larger number of light emitting diodes, in particular five diodes, able to point out the center (equisignal axis), right, left, up and low positions, in addition to the diode for the detection of the presence of the carrier.

**Claims**

1. Ultrasound receiver for the localization of submarine or similar sound sources, characterized in that it comprises: at least a pair of receiving transducers (TS, TD) with squint axes, i.e. axes inclined to each other; an electronic circuit, combined to said pair of transducers, for the amplification and processing, by amplitude comparison, of the signals detected by the transducers; and a display system for displaying the processed signals.

2. Ultrasound receiver according to claim 1, characterized in that the squint angle, i.e. the angle formed by the axis of the transducers, is adjustable.

3. Ultrasound receiver according to the preceding claims, characterized in that said amplification and processing electronic circuit comprises in combination, for each pair of transducers: for each transducer (TS, TD), a signal preamplification and equalization block (1a; 1b); a switch (2) for alternatively picking up the amplified signals of the two transducers, said switch operating at a sampling frequency supplied by a scaler (14) driven by an oscillator (13); a block (15) for selecting, amplifying and filtering the output signal from said switch (2); a block (16) for demodulating the output signal from said selecting, amplifying and filtering block (15); the signal coming out from said demodulating block (16) being fed to the display system.

4. Ultrasound receiver according to the preceding claims, characterized in that said selecting, amplifying and filtering block (15) comprises: a selective amplifier (3) centered on the sampling frequency of said switch (2); a filter (5); and an amplifier (6).

5. Ultrasound receiver according to claim 4, characterized in that between said selective amplifier (3) and said filter (5) there is interposed a balanced mixer (4) able to convert the frequency of the output signal from said selective amplifier, said mixer being driven by said oscillator (13).

6. Ultrasound receiver according to the preceding claims, characterized in that said demodulating block (16) comprises an amplitude detector (7), a band-pass filter (8) and a phase detector (10).

7. Ultrasound receiver according to the preceding claims, characterized in that the output signal from said amplitude detector (7) is fed to a feedback loop for the automatic control of the gain of said selecting, amplifying and filtering block (15); a signal detecting the presence of the carrier being drawn from said feedback loop and sent to the display system.

8. Ultrasound receiver according to the preceding claims, characterized in that the output signal from said demodulating block (16) is sent, besides to said display system, also to a block (11, 12) for the withdrawal of the noise component from the useful signal.

9. Ultrasound receiver according to the preceding claims, characterized in that said display system comprises a mobile coil-operating instrument controlled by the output signal from said demodulating block (16).

10. Ultrasound receiver according to claims 1 to 8, characterized in that said display system comprises a window generator (17) to which the signal coming out from said demodulating block (16) is fed; said window generator driving a plurality of light emitting diodes (19, 21, 23) according to the intensity and sign of the output signal from said demodulating block (16).

11. Ultrasound receiver according to claim 10, characterized in that it further comprises a comparator (25) able to compare the intensity of the continuous component of the signal detected with a threshold value, said comparator driving a further light emitting diode (28).

12. Ultrasound receiver according to claim 11, characterized in that said further light emitting diode (28) is further controlled by a comparator (29) able to inhibit the switching on thereof in case of excessive values of the noise component in the detected signal.

13. Ultrasound receiver according to claims 10 to 12, characterized in that the switching on of said light emitting diodes (19, 21, 23, 28) is intermittent.

14. Ultrasound receiver according to one or more of the preceding claims, characterized in that it comprises two pairs of receiving transducers with inclined, i.e. squint axes, lying on two planes at right angles to each other; to each pair of receiving transducers, an electronic circuit being combined for the amplifying and processing the received signal.

15. Ultrasound receiver according to claim 14, characterized in that the display system comprises five light emitting diodes for the displaying of the direction of the received signal and a light emitting diode for displaying the presence of the carrier.

FIG.1

FIG. 2

FIG.6

FO1

ID
Is

t

FIG. 3

FO2

CC

t

FIG.4

FO3

t

FIG. 5